# EUROPEAN PATENT SPECIFICATION

(11) **EP 0 424 414 B1**
(45) Date of publication and mention of the grant of the patent: **29.05.1996**
(21) Application number: 89907253.2
(22) Date of filing: 20.06.1989
(51) Int. Cl.: A23L 3/44, A23C 9/123

(54) **A PROCESS FOR PREPARING LYOPHILIZED FOODSTRUFFS IN THE SOLID STATE AND HAVING PREFERABLY PREDETERMINED GEOMETRICAL SHAPES, OF HIGH NUTRITIONAL VALUE AND READY TO USE, AND THE PRODUCTS SO OBTAINED**
HERSTELLUNGSVERFAHREN FÜR GEFRIERTROCKNUNG VON FESTEN LEBENSMITTELN MIT IN VORAUS BESTIMMTEN GEOMETRISCHEN FORMEN UND GROSSEM NÄHRWERT
PROCEDE DE PREPARATION DE PRODUITS ALIMENTAIRES SOLIDES LYOPHILISES TRES NUTRITIFS ET PRETS A CONSOMMER, AYANT DE PREFERENCE DES FORMES GEOMETRIQUES PREDETERMINEES, ET PRODUITS AINSI PREPARES

(30) Priority: 20.06.1988 IT 4811288
(43) Date of publication of application: 02.05.1991
(73) Proprietor: INNOVATIVE FREEZE-DRYING PRODUCTS (IFDP) N.V., Willemstad Curacao (AN)
(72) Inventor: CONSTANZO. Luigi, I-95126 Catania (IT); CALCAVECCHIA, Biagio, I-95126 Catania (IT)
(74) Representative: Iannone, Carlo Luigi
(86) International application number: IT8900044
(87) International publication number: WO8912407

(56) References cited:
- DE-A- 1 692 705
- DE-A- 1 816 761
- FR-A- 1 395 921
- FR-A- 1 600 708
- NL-A- 288 628
- US-A- 2 751 687
- US-A- 3 315 619

## Description

This invention relates to a process allowing lyophilized foodstuffs to be produced having preferably predetermined geometrical shapes and ready to use, as well as of high nutritional value, and to the products so obtained.

More particularly, this invention relates to a preparation procedure whose steps allow lyophilized products to be obtained having predetermined geometrical shape like those claimed herein.

Moreover, this invention relates to products of the type mentioned above which, though in the solid form and ready to be eaten, and accordingly having all advantageous features of such conformations, keep substantially unaltered the original nutritional features of the ingredients employed in the formulation itself.

The use of snacks ready to eat is very widespread because of the remarkable advantages in their commercial distribution and in eating the same.

Particular reference is made here to their easy stockage and storage, as well as to the practical advantages on the user's part in transporting and eat-ing them.

Foodstuffs like yoghurt, fruit-flavoured yoghurt or fruit- or milk-based foodstuffs are in many cases preferred because they are considered as richer in nutritional values and as healthier.

The main drawbacks of such kind of foodstuffs are those stemming from their short conservation time even at low temperatures, unless they are stabilized by heat treating.

Such ways of conservation in the first instance limit their employment, while in the second case they give rise to a more or less remarkable reduction in the amounts of nutritional stuffs contained in the product.

In particular, for instance, in the case of a trip to the seaside it is necessary to have a refrigerated bag or a refrigerator in order to have the possibility of eating a yoghurt or a fresh fruit smash, so that in most cases the use of such foodstuffs is to be renounced.

In US-A-3315619 it is described a process for the preparation of lyophilized foodstuff wherein a dough is formed mixing the ingredients and homogenizing the same;
then the dough is mixed with air to give a density of 0,5-0,9 g/cm³. There after, the dough is extruded, and then the product is cooled in an atmosphere of about -28°C to a temperature of about -9 to -15°C.

In DE-A-1692705 it is described a process for the preparation of lyophilized foodstuff wherein the ingredients are mixed to a homogeneous past and after trapping air into the mixture a shaping step and a lyophilizing step are carried out.

Accordingly, the Applicant has devised to realize lyophilized foodstuffs in the solid form and ready to eat, having all conservation and transportation practical requisites that are characteristic of such type of products, such foodstuffs also having all features and nutritional values of foodstuffs like yoghurt, milk, fruit, meat, eggs or vegetables.

Thus, a process has been realized in the laboratories of the Applicant for the production of foodstuffs having the characteristics mentioned above, said process comprising procedural steps that allow lyophilized foodstuffs to be obtained in predetermined geometrical shape and ready to use, said foodstuffs keeping substantially unaltered all organoleptic and nutritional features of the ingredients employed in their formulation.

Such results are obtained according to the present invention through the realization of a process wherein, after mixing all liquid, liquid and solid (dusts and/or pellets) ingredients designed, a step is carried out in which air is trapped inside the product with simultaneous or separate cooling, under continuous stirring, said step giving the mixture a plastic state of high viscosity that allows the next shaping operation to be performed, preferably by extrusion. Then the product is deep-frozen and then lyophilized so that it is obtained in the solid form.

The advantages stemming from the realization of products like those obtained by means of the process according to the present invention are self-evident and in particular they can be considered as commercial-type advantages and as consumer's advantages.

Among the commercial-type advantages, the reduced weight of the product can be included, so that it can be more easily manipulated and transported, and the possibility of storing the same at room temperature, so that a remarkable reduction in distribution costs is obtained.

The consumer will have at his/her disposal a product that can be more easily transported with respect to the similar non-lyophilized product, and in addition he/she will have the possibility of carrying the product without necessarily having at disposal a refrigerator or similar cooling means.

Accordingly, it is a specific object of the present invention a process for the preparation of lyophilized foodstuffs having geometrical shapes and ready to eat, according to the enclosed claim 1.

Moreover, a step b2) can also be included in the process of cooling, under continuous mixing, the mixture until reaching a temperature in the range from -5 to -12°C which step can be performed independently of the fact that said step b1) is carried out.

According to the present invention the process in question can also be realized by continuous mixing, so trapping air, while cooling the mixture, or trapping air into the mixture and cooling and mixing continuously, simultaneously or successively.

Again according to the present invention, step b) can be completed with a pasteurization of the mixture.

Preferably, the step b) is performed by cooling the product until reaching a temperature between -5°C and -9°C.

Next to step e) the product obtained can be iced with chocolate and its substitutes or similar products, or it can be coated with a film of cellulose, gum, wax, maltodextrins, milk proteins, sugars and so on.

As already mentioned above, the ingredients treated by the process according to the present invention can be all food products and food additives allowed by the laws, but fresh foodstuffs having a good nutritional value that require low temperature conservation, like yoghurt, milk, fruit etc. are to be preferred.

If a sugar product is to be employed in the formulation, it is preferable to use dextrose because it is scarcely hygroscopic and in addition has a negative heat of solution. These features make the lyophilized product more capable to resist the action of the environmental humidity when the package containing the product is opened, and because it is more palatable as it gives a pleasant feeling of freshness on dissolving in the mouth.

In case both liquid and solid ingredients are present, step a) is preferably performed:
a1) by mixing the solid ingredients;
a2) by mixing the liquid ingredients;
a3) by mixing both ingredients a1) and a2).

Step b) can be performed with or without cooling. Preferably such step will be carried out with cooling in order to warrant a better conservation of the nutritional and organoleptic qualities of the raw materials employed and to avoid any possible microbial proliferations.

The trapping of air into the mixture provided in step b1) can be carried out in a spontaneous way operating with open systems or with closed systems, injecting air under pressure, or finally by means of other procedures capable of realizing such operation together with the two others or before them.

However it can be remarked that when step b1) is performed in closed systems with mixtures prepared according to the step b) and containing living milk ferments, the survival of said ferments depends on the value of pressure inside the system.

Indeed, it has been observed that survival of milk ferments decreases strongly with increasing the working pressure. Accordingly, in order to obtain the maximum possible survival of living milk ferments, the operation is to be preferably carried out at atmospheric pressure or anyway so as not to reach pressures above the relative pressure of 1 bar.

Though there are many problems in performing correctly the operation of trapping air into the mixture, such operation is very important because it yields a set of economical advantages such as:
- speeding up the lyophilization process, thanks to the formation of empty spaces in the mixture mass that favour the going out of water vapour;
- the possibility of lyophilizing mixtures with remarkably high dry residue because the possibility of melting caused by high partial pressures due to mass transfer difficulties is minimized.

Moreover, the three operations of steps b1) and b2) as a whole and their correct realization give further advantages such as:
- the formation of water crystallization nuclei of very small sizes;
- the instantaneous reconstitution;
- the finely pitted structure and the crumbly consistency, which is a peculiar characteristic of the products obtained with the process of the present invention.

Step c) consisting in the operation of shaping the product which has been made viscous and plastic by the preceding cooling with continuous mixing, can be realized according to the present invention preferably by extrusion and drawing, or by filling moulds.

As regards the lyophilization step f), it will be carried out under highly decreased pressure.

The lyophilized product obtained according to the process disclosed above has a consistency or texture which is characteristic and can be described by determining the following properties of the product:
1) resistance to penetration;
2) crumblyness;
3) work to be done for a 6 mm penetration into the product mass.

Such properties have been determined employing a 4301 Instron dynamometer according to the following procedures:

### Test 1: penetration resistance

### Materials and method:

| - chisel-type bit, obtained from a steel cylinder of 8 mm diameter, having the following characteristics: | |
|---|---|
| - cutting base length | 0,5 mm |
| - cutting base width | 8 mm |
| - angle of the tapered part | 22° |
| - feed speed | 50 mm/min |
| - applied force | 10 kg |

### Estimate:

From the records of the resistance of the product against the penetration of the tool, a curve is obtained whose initial part can be likened to a straight line. The slope of such straight portion of the curve represents the value of the penetration resistance expressed as kg/mm. The values of the measurements are obtained from the average of at least 10 tests on samples of identical sizes.

### Test 2: crumblyness and work done for 6 mm penenetration depth

### Material and method

| | |
|---|---|
| - cylindrical bit of diameter | 0.8 mm |
| - feed speed | 2 mm/min |
| - applied force | 10 kg |
| - penetration depth | 6 mm |

### Estimate:

By performing the test as above, a curve with two peaks is obtained.
The height of the first peak represents the crumblyness that is expressed as kg. The second determinable property is the work required for penetrating 6 mm into the product, said work being proportional to the area under the curve and being expressed as kg x mm.

The average properties determined in the lyophilized products obtained according to the present process are as follows:
1) penetration resistance: from 0.1 to 10 kg/mm, preferably from 2 to 5 kg/mm
2) crumblyness: from 0.05 to 5 kg, preferably from 0.1 to 3 kg
3) work for penetrating a 6 mm depth: from 0.05 to 10 kg x mm, preferably from 1 to 8.5 kg x mm.

Moreover, a product is to be also considered as comprised in the scope of the present invention when it is obtained by the same process as above and comprises:

| | |
|---|---|
| fresh yoghurt and/or fresh milk | 0-100 % |
| fruit | 0-100 % |
| other liquid or solid ingredients | 0-100 % |
| additives | 0-100 % |

More particularly, the ingredients that can be present are: fresh milk, 9-80 %; fruit, 2-90 %; other liquid or solid ingredients, 0-70 %, and additives, 0-10%.

In case yoghurt is present, it is in amounts between 10 and 100 %, and preferably it will be present at a percentage of at least 70 %.

Such other liquid or solid ingredients mentioned above will consist of meat, vegetables, eggs, sugars, maltodextrins, glucose syrups.
The additives can be thickening agents, emulsifiers, colouring agents, flavours, anti-oxidizing agents, acidifiers.

Fruit employed can be fresh fruit, or deep-frozen fruit, dried or pasteurized fruit, such fruit being in the form of pellets or of a smash having a natural or strengthened concentration.

Some practical examples of realization of the process according to the present invention will be reported in the following.

### EXAMPLE I

The following ingredients are subjected to the process:

| | |
|---|---|
| - natural whole yoghurt | 70.0 % |
| - strawberry smash | 13.1 % |
| - dried red beets | 1.2 % |
| - carrageenins | 0.1 % |
| - strawberry flavour | 0.2 % |
| - soya lecithin | 0.1 % |
| - dextrose | 15.2 % |
| - L-ascorbic acid | 0.1 % |
| - coating: based on hydrogenated, lemon-lavoured vegetable fats. | |

First the dried red beets, carrageenins, soya lecithin, dextrose and ascorbic acid (solid ingredients) are mixed, and the mixture is then added together with strawberry flavour to the yog urth and to the strawberry smash.

The mass is mixed further so as to make the distribution of the ingredients uniform throughout the mixture, keeping the temperature at +4°C.

Then the mixture is cooled with continuous mixing and under atmospheric pressure till the product starts showing a semisolid texture (between -5°C and -12°C) and an air percentage of 10-30 % of the initial volume has been trapped.

Then the product is subjected to extrusion forming, taking care that the product does not undergo superficial thawing and that trapped air does not leak out.

The product is deep-frozen at a temperature between -30°C and -40°C, and next it is placed on the previously cooled trays of the lyostat at the ratio of 6.8 kg/m², keeping the temperature of said product constantly at the value of -30°C.

Lyophilization in the case of product rods of 1.2 cm diameter is carried out as follows:

| | |
|---|---|
| - maximum temperature of plates | 65°C |
| - maximum temperature of the product surface | 30°C |
| - pressure inside the lyostat | 0.3 mm Hg |

When the lyophilization process is over, the residual moisture is preferably between 4 and 6 %.

The value of consistency or texture determined on the Instron apparatus and following the procedures already disclosed above, is as follows:

| | |
|---|---|
| - penetration resistance | from 0.5 to 2.5 kg/mm |
| - crumblyness | from 0.3 to 0.5 kg |
| - work done in penetrating a 6 mm depth | from 1.5 to 2.2 kgxmm |

The lyophilized product is taken away from the vessels, subjected to selection, iced with lemon flavoured coating and packaged.

It is also possible to obtain a product having more flavours combined together within the same piece, if mixtures having similar features but different flavours are processed in a parallel way, extruding the mixture with an extruder capable of putting together the mixtures. For instance, it is possible to extrude a small bar a half of which has a "strawberry yoghurt" flavour while the other half has a "vanillin yoghurt" flavour.

Vanillin yoghurt is prepared in that case in the same way as the strawberry yoghurt, employing the following formulation:

| | |
|---|---|
| - natural whole yoghurt | 80.0 % |
| - dextrose | 19.6 % |
| - carrageenins | 0.1 % |
| - soya lecithin | 0.1 % |
| - ascorbic acid | 0.1 % |
| - vanillin flavour | 0.1 % |

### EXAMPLE II

The following ingredients are processed:

| | |
|---|---|
| - apple smash | 85.0 % |
| - dextrose | 12.0 % |
| - lemon juice | 2.4 % |
| - pectin | 0.5 % |
| - natural flavours | 0.1 % |
| - deep-frozen apple dice i.q.f. (individual quick frozen) - coating: melting chocolate containing 32-34 cocoa butter. | |

All solid ingredients, i.e. dextrose and pectin, are first mixed.

Then lemon juice, flavours and the solid ingredient mixture mentioned above are added to the apple smash kept under stirring.

The whole mixture is homogenized and pasteurized.

The mixture is cooled with continuous mixing till reaching a temperature in the range from -5 to -12°C after blowing air in amounts from 10 to 30 % of the initial volume of the product.

The apple dice are then added to the cold and viscous mass previously obtained, dispersing them throughout the same in a uniform way.

The product is then subjected to the forming operation for obtaining the predetermined sizes.

The product is deep-frozen at a temperature between -30°C and -40°C, and next it is placed on the pre-cooled trays of the lyostat.

Finally the product is lyophilized by beans of a cycle suitable to the sizes of the pieces as well as to the amounts of them on the trays . In particular, in the case of 1 cm thickness bars, lyophilization is carried out as follows:

| | |
|---|---|
| - maximum temperature of plates | 60 °C |
| - maximum temperature of the product surface | 25 °C |
| - pressure inside the lyostat | 0,3 mmHg |

When the lyophilization process is over, the residual moisture of the product is 3%.
The value of consistency determined on the Instrom apparatus and following the procedure already disclosed above, is as follows:

| | |
|---|---|
| - penetration resistance | from 0.2 to 2 kg/mm |
| - crumblyness | from 0.1 to 0.3 kg |
| - work for a penetration depth of 6 mm | from 0.7 to 3.2 kg x mm. |

The lyophilized product is unloaded from the trays, subjected to selection for removing broken pieces, and sent to the chocolate-icing plant.

Finally the product is again subjected to selection and packaged.

As a variant to the procedure detailed above, during the icing operation the product can be spread with dry or dried fruit, or with puffed cereals, small chocolate pieces and so on.

### EXAMPLE III

The following ingredients are processed:

| | |
|---|---|
| - coco smash | 74.9 % |
| - dextrose | 25.0 % |
| - natural flavours | 0.1 % |
| - coating: melting chocolate containing 32-34 % cocoa butter. | |

Coco smash, dextrose and flavours are all mixed with care.

The mixture so obtained is then cooled with continuous mixing until it acquires a semisolid texture (temperature between -5 and -12°C) and has trapped air in amounts between 10 and 30 % of the initial volume of the product.

The viscous mass so obtained is then extruded into the desired shape.

The product so formed is deep-frozen at a temperature between -30°C and -40°C and then placed on the precooled trays of the lyostat.

Finally the product is lyophilized by means of a cycle fit for the piece sizes and the amounts of the products arranged on the trays.

In particular, when processing small rods of 1 x 1 x 4 cm sizes and distributing the pieces on the trays at a density of 6 kg/m², the lyophilization is carried out as follows:

| | |
|---|---|
| - maximum temperature of plates | 60°C |
| - maximum temperature on the surface of the product | 25°C |
| - pressure inside the lyostat | 0.3 mm Hg |

When the lyophilization is over, the product has a residual moisture between 4 % and 6 %.

The consistency or texture determined on the Instron apparatus employing the procedures disclosed above is as follows:

| | |
|---|---|
| - penetration resistance | from 0.3 to 2.5 kg/mm |
| - crumblyness | from 0.1 to 0.8 kg |
| - work for a penetration depth of 6 mm | from 0.7 to 4 kg x mm |

The lyophilized product is unloaded from the trays subjected to selection for removing broken pieces and sent to the chocolate-icing plant.

Finally the product is definitively selected and packaged.

### EXAMPLE IV

The following ingredients are processed:

| | |
|---|---|
| - whole fresh milk | 45.0 % |
| - strawberry smash | 32.0 % |
| - dextrose | 15.3 % |
| - fresh liquid cream | 2.0 % |
| - milk proteins | 2.0 % |
| - natural vegetable extract | 3.5 % |
| - L-ascorbic acid | 0.1 % |
| - natural flavours | 0.1 % |
| - coating: based on hydrogenated vegetable vanillin-flavoured fats. | |

The solid ingredients are first mixed: dextrose, milk proteins and L-ascorbic acid; then the liquid ingredients are separately mixed: milk, cream, natural vegetable extracts and natural flavours.

Both the mixtures are then added to the strawberry smash which had been previously thawed and kept at +4°C.

The whole mixture is then homogenized and pasteurized.

The mixture is then cooled with continuous mixing until the product starts showing a semisolid consistency or texture so that it keeps the predetermined shape (from -5°C to -12°C) and after blowing air in amounts from 10 to 30 % of the initial volume.

Then the product is subjected to extrusion forming.

The product so obtained is deep-frozen at a temperature between -30°C and -40°C and next placed on the previously cooled trays of the lyostat, keeping the temperature at -30°C.

Lyophilization is carried out according to the following parameters in the case of a product in the shape of rods of 1.2 cm diameter:

| | |
|---|---|
| - maximum temperature of plates | 70°C |
| - maximum temperature of the product surface | 35°C |
| - pressure inside the lyostat | 0.3 mm Hg |

The residual moisture is between 4 % and 6 %.

The consistency or texture of the product determined on the Instron apparatus with the procedures already disclosed above is as follows:

| | |
|---|---|
| - penetration resistance | from 1 to 3 kg/mm |
| - crumblyness | from 0.4 to 0.8 kg |
| - work for 6 mm penetration depth | from 2.5 to 3.5 kg x mm |

The lyophilized product is subjected to selection, then iced with the vanillin-flavoured coating and packaged.

### EXAMPLE V

The product is prepared employing the following formulation:

| | |
|---|---|
| - skimmed milk | 71.5 % |
| - dextrose | 17.8 % |
| - egg yolk | 10.7 % |

Dextrose is added to yolks and the whole is speedily mixed until complete dissolution. Then, milk is added.

The mixture is again mixed speedily for making it homogeneous and then it is pasteurized.

Air is injected in amounts from 10 to 30 % of the initial volume of the mixture, and the whole mass is cooled with continuous mixing until reaching a temperature between -5 and -12°C.

The mixture which is semisolid at this point is extruded into the predetermined shape.

The product is deep-frozen at a temperature between -30°C and -40°C and placed on the trays of the lyostat.

Lyophilization is then performed, which in the case of 1.2 cm diameter rods distributed on the trays at a density of 6.2 kg/m² is carried out according to the following parameters:

| | |
|---|---|
| - maximum temperature of plates | 65°C |
| - maximum temperature of the product surface | 35°C |
| - pressure inside the lyostat | 0.3 mm Hg |

Lyophilization is carried out so as to obtain a residual moisture between 2 and 6 %.

The consistency or texture determined on the Instron with the procedures already mentioned above is as follows:

| | |
|---|---|
| - penetration resistance | from 0.8 to 2.7 kg/mm |
| - crumblyness | from 0.1 to 0.7 kg |
| - work for 6 mm penetration depth | from 1.4 to 2.6 kg x mm |

The product is selected and packaged with a high-barrier material.

### EXAMPLE VI

The product is prepared employing the following formulation:

| | |
|---|---|
| - dextrose | 6.3 % |
| - pectin | 0.1 % |
| - pasteurized whole milk | 9.5 % |
| - water | 41.0 % |
| - glucose syrup | 6.3 % |
| - cooked minced meat | 7.8 % |
| - hydrogenated vegetable fat | 3.1 % |
| - maltodextrins | 6.3 % |
| - cocoa | 0.4 % |
| - soya lecithin | 0.3 % |
| - salt | 0.1 % |
| - natural flavours | 0.1 % |
| - whole eggs | 6.3 % |
| - natural orange juice | 8.6 % |
| - mixed dried fruit in the form of dice | 2.4 % |
| - raisin | 1.4 % |
| - coating: milk chocolate | |

Powder ingredients are mixed (dextrose, pectin, maltodextrins, cocoa, soya lecithin, salt).

The liquid ingredients are mixed (milk, water, glucose syrup, natural flavours, eggs, orange juice), fats previously molten, and meat.

While such liquid ingredients are stirred, the mixture of the solid ingredients is added.

The whole mixture is homogenized and pasteurized.

The mixture so obtained is added with air through injection (from 10 to 30 % of the initial volume) and then it is cooled with continuous mixing until it becomes a semisolid mass (at a temperature between -5°C and -12°C).

Dice of dried fruit and raisin are added, distributing the sane uniformly throughout the whole mass.

The product is given the shape of a small bar, said product having a viscous but plastic consistency, employing some moulds and operating in a suitable environment so as to avoid any possible increase in surface temperature.

The product is deep-frozen until reaching a temperature between -30°C and -40°C.

The product is taken out of the moulds and placed on trays at the density of 7.6 kg/m² operating in a cold environment in order to prevent the product from thawing.

The product is then lyophilized employing in the specific case of bars of 1 cm thickness the following parameters:

| | |
|---|---|
| - maximum temperature of plates | 80°C |
| - maximum temperature of the product surface | 45°C |
| - pressure inside the lyostat | 0.3 mm Hg |

The final moisture is in the range from 3 to 6 %.

The consistency of the product determined on the Instron apparatus by the procedures mentioned above is as follows:

| | |
|---|---|
| - penetration resistance | from 0.4 to 2 kg/mm |
| - crumblyness | from 0.05 to 0.7 kg |
| - work for 6 mm penetration depth | from 0.4 to 3.5 kg x mm |

The small bars lyophilized are selected and they can be optionally spread with small grains of dried or roasted fruit, dry fruit, puffed cereals, chocolate flakes, and so on, and/or coated with milk chocolate.

Finally the product is packaged.

## Claims

1. A process for the preparation of lyophilized foodstuffs having predetermined geometrical shapes and ready to eat, said process being characterized in that it comprises the step of:
a) cold mixing the ingredients homogeneously;
b) homogenizing and pre-freezing, at a temperature -5° and -12°C, the ingredients and adding air into the mixture up to a percentage in the range between 10 and 30% of the initial volume of the ingredients;
c) shaping the product so obtained into the desired shape;
d) deep-freezing the product so shaped at a temperature in the range from -30°C to -40°C; and
e) freeze-drying the product so obtained down a residual moisture between 2 and 6% (as determined by the Karl Fisher method).

2. A process according to claim 1, characterized in that after step e) an icing step is carried out employing chocolate or any equivalent product or a coating step is performed for obtaining a coating consisting of a film of cellulose, or gums, or waxes or maltodextrins or milk proteins or sugars.

3. A process according to claim 1, characterized in that said step b) is carried out by continuous mixing trapping air and then cooling the mixture.

4. A process according to claim 3, characterized in that said step b) is carried out by trapping air into the mixture, cooling and mixing continuously, simultaneously with the operation of air trapping or after that.

5. A process according to claims 1 or 3 or 4 or 5, wherein said air trapping into the mixture is performed operating spontaneously in open systems.

6. A process according to claims 1 or 4 or 5, wherein said air trapping into the mixture is performed by injecting air under pressure in closed systems.

7. A process according to anyone of the claims 1-6 wherein said step b) is carried out under a relative pressure equal to or less than 1 bar.

8. A process according to claims 3 or 4, wherein said step b) is performed by cooling the product until reaching a temperature between -5°C and -9°C.

9. A process according to anyone of the preceding claims, characterized in that a pasteurization of the product is performed in said step b).

10. A process according to anyone of the preceding claims, wherein the step a) in the presence of liquid and solid ingredients is carried out by:
a1) mixing the solid ingredients
a2) mixing the liquid ingredients
a3) mixing the ingredients of a1) and a2).

11. A process according to anyone of the preceding claims, wherein said step b) is carried out with refrigeration.

12. A process according to anyone of the preceding claims, wherein said step c) of shaping the product is realized by filling moulds.

13. A process according to anyone of the preceding claims 3-12, wherein said shaping step c) is realized by extrusion and/or drawing.

14. A process according to anyone of the preceding claims, wherein said lyophilization step e) is realized under strongly decreased pressure.

15. Lyophilized foodstuffs having geometrical shapes and obtained by the process according to anyone of the preceding claims, said foodstuffs being characterized in that they are ready to eat and comprise:
| | |
|---|---|
| fresh yoghurt and/or fresh milk | 0-100 % |
| fruit | 0-100 % |
| other liquid or solid ingredients | 0-100 % |
| additives | 0-10 % |

16. A product according to claim 15 characterized in that it comprises:
| | |
|---|---|
| fresh milk | 9-80 % |
| fruit | 2-90 % |
| other liquid or solid ingredients | 0-70 % |
| additives | 0-10 % |

17. A product according to claim 15, characterized in that it comprises yoghurt between 10 and 100 %, and additives between 0 and 10 %, and other liquid or solid ingredients between 0 and 90 %, as a whole.

18. A product according to claim 17, wherein yoghurt is present in amounts of at least 70 %.

19. A product according to claim 15, characterized in that it comprises:
| | |
|---|---|
| fresh yoghurt | 10-80 % |
| fruit | 20-90 % |
| other liquid or solid ingredients | 0-70 % |
| additives | 0-10 % |

20. A product according to claim 19, wherein yoghurt and fruit are present as a whole in amounts of 70-100 %.

21. A product according to anyone of the preceding claims 15-20, wherein said other liquid or solid ingredient consist of meat, eggs, vegetables, sugars, maltodextrins, glucose syrups.

22. A product according to anyone of the preceding claims, wherein said additives consist of thickening agents, emulsifiers, colouring agents, flavouring agents, anti-oxidizing agents, acidifying agents.

23. A product according to anyone of the preceding claims 15, 16, 19, 20 wherein said fruit is fresh fruit, or it is deep-frozen, or dried, or pasteurized fruit, in the form of pellets of a smash at the natural or a strengthened concentration.

24. A product according to anyone of the preceding claims 15-22 whose consistency determined by the method described or texture is identified by the following values:
| | |
|---|---|
| - penetration resistance | 0.1-10 kg/mm |
| - crumblyness | 0.05-5 kg |
| - work done for a 6 mm penetration depth into the product | 0.5-10 kg x mm |

25. A product according to claim 24, whose consistency or texture is identified by the following values:
| | |
|---|---|
| - penetration resistance | 2-5 kg/mm |
| - crumblyness | 0.1-3 kg |
| - work done for a 6 mm pentration depth into the product | 1-8.5 kg x mm |

## Patentansprüche

1. Verfahren zur Herstellung von gefriergetrockenen und essbereiten Lebensmitteln mit vorbestimmten geometrischen Formen, dadurch gekennzeichnet, dass es folgende Verfahrensschritte aufweist:
a) innige Kaltvermischung der Bestandteile,
b) Homogenisierung und Vorfrieren von Bestandteilen bei einer Temperatur zwischen - 5° und 2°C und zugabe von Luft zum Gemisch bis zu einem Anteil im Bereich zwischen 10 und 30% des anfänglichen Volumenmenge der Bestandteile;
c) Formen des so erhaltenen Erzeugnises in eine gewünschte Form;
d) Tieffrieren der so geformten Erzeugnisses bei einer Temperatur zwischen - 30° und - 40°C;
e) Gefriertrocknen des so erhaltenen Erzeugnisses bis zu einer restlichen Feuchtigkeit zwischen 2 und 6% (wie durch das Karl Fischer-Verfahren bestimmt).

2. Verfahren nach Anspruch 1, dadurch gekennzeichnet, dass nach dem Verfahrensschritt e) ein Glasierungsschritt mit Schokolate oder einem ähnlichen Produkt oder ein Beschichtungsschritt durchgeführt wird, um eine Umkleidung aus Zellulosefilm oder Gummie oder Wachsen oder Maltodextrinen oder Milchproteinen oder Zuckern zu erhalten.

3. Verfahren nach Anspruch 1, dadurch gekennzeicnet, dass der vorgenannte Schritt b) durch eine kontimierliche Mischung und Lufteinmischen und dann durch Kühlung des Gemisches durchgeführt wird.

4. Verfahren nach Anspruch 3, dadurch gekennzeichnet, dass der vorgenannten Schritt b) durch Lufteinmischung zum Gemisch, kontimierliches Vermischen und Kühlen,gleichzeitig mit der Lufteinmischung oder danach durchgeführt wird.

5. Verfahren nach Anspruch 1 oder 3 oder 4 oder 5, worin das vorgenannte Einmischen von Luft in das Gemisch in einem offenen System spontan durchgeführt wird.

6. Verfahren nach Anspruch 1 oder 4 oder 5, worin das vorgenannte Einmischen von Luft in das Gemisch in einem geschlossenen System durch Einspritzen der Druckluft durchgeführt wird.

7. Verfahren nach je einem der Ansprüche 1 bis 6, worin der vorgenannte Schritt b) bei einem Relativdruck von 1 Bar oder weniger durchgeführt wird.

8. Verfahren nach Anspruch 3 oder 4, worin der vorgenannte Schritt b) durch Kühlen des Produkts bis zu eine Temperatur zwischen 5°C und -9°C durchgeführt wird.

9. Verfahren nach je einem der vorhergehenden Ansprüche, worin im vorgenannten Schritt b) eine Pastorisierung des Produkts durchgeführt wird.

10. Verfahren nach je einem der vorhergehenden Ansprüche, worin der Schritt a) in Gegenwort von flüssigen oder festen Zusatzstoffen durch
a 1) Vermischen der festen Zusatzstoffen,
a 2) Vermischen der flüssigen Zusatzstoffen,
a 3) Vermischen der Zusatzstiffen von a 1) und a 2) durchgeführt wird.

11. Verfahren nach je einem der vorhergehanden Ansprüche dadurch gekennzeichnet, dass der vorgenannte Schritt b) durch Tiefkühlen durchgeführt wird.

12. Verfahren nach je einem der vorhergehenden Ansprüche, worin der vorgenannte Schritt c) zur Fromung des Produkts durch Einfüllen in Formen durchgeführt wird.

13. Verfahren nach je einem der vorhergehenden Ansprüche, worin der vorgenannte Schritt c) durch Extrusion und/oder durch Tiefziehen durchgeführt wird.

14. Verfahren nach je einem der vorhergehenden Ansprüche, worin der vorgenannte Gefriertrocknen-Schritt e) bei einem stark vermiderten Druck durchgeführt wird.

15. Gefriergetrockene Nährmittel mit einer geometrischen Form, erhalten durch das Verfahren nach je einem der vorherigen Ansprüche, dadurch gekennzeichnet dass sie sofort essbar sind und folgende Bestandteile enthalten:
| | |
|---|---|
| Frischyoghurt oder Frischmilk | 0 - 100% |
| Obst | 0 - 100% |
| andere flüssige oder feste Ingredienzen | 0 - 100% |
| Zusatzstoffe | 0 - 10%. |

16. Produkt nach Anspruch 15, dadurch gekennzeichnet, dass es folgende Bestandteile erhält:
| | |
|---|---|
| Frischmilck | 9 - 80% |
| Obst | 2 - 90% |
| andere flüssige oder feste Ingredienzen | 0 - 70% |
| Zusatzstoffe | 0 - 10%. |

17. Produkt nach Anspruch 15, dadurch gekennzeichnet, dass es Yoghurt zwischen 10-100% und Ingredienzen zwischen 0 und 10% und andere flüssige oder feste Ingredienzen zwischen 0 und 90% enthält.

18. Produkt nach Anspruch 17, worin Yoghurt in einen Arteil von mindestens 70% enthalten ist.

19. Produkt nach Anspruch 15, dadurch gekennzeichnet, dass es folgende Bestandteile enthält:
| | |
|---|---|
| Obst | 20 - 90% |
| andere flüssige oder feste Ingredienzen | 0 - 70% |
| Zusatzstoffe | 0 - 10%. |

20. Produkt nach Anspruch 19, worin Yoghurt und Obst zusammen in einem Anteil von 70 bis 100% enthalten sind.

21. Produkt nach je einem der vorhergehenden Ansprüche 15 bis 20, worin die vorgenannten anderen flüssigen oder festen Ingredienzen aus Fleisch, Eier, Vegetabilien, Zuckern, Maltodextrinen, Glukose-Sirup bestehen.

22. Produkt nach je einem dr vorhergehenden Ansprüche, worin die vorgenannten Zusatzstoffe aus Verdickungsmitteln, Emulsioniermitteln, Frabmitteln, Geruchmitteln, Antioxidiermitteln, Versäurungsmitteln bestehen.

23. Produkt nach je einem der vorhergehenden Ansprüche 15,16,19,20, worin das vogenannte Obst Frischobst oder tiefgefroren oder getrockenes oder pastorisiertes Obst in Form von kleinen Kugeln aus einem Brei natürlicher oder verstärkter Konzentration.

24. Produkt nach je einem der vorhergehenden Ansprüche, dessen, durch die beschriebene Methode oder durch die Gefüge bestimmte Beständigkeit durch folegnde Werte angegeben ist:
| | |
|---|---|
| - Eindringewiderstand | 0,1 - 10 Kg/mm |
| - Zertröckelung | 0,05 - 5 Kg |
| - Arbeit geleistet fuer ein Eindringen von 6 mm ins Produkt | 0,5 - 10 Kg x mm. |

25. Produkt nach Anspruch 24 dessen, durch die beschriebene Methode oder durch die Gefüge bestimmte Beständigkeit durch folegnde Werte angegeben ist:
| | |
|---|---|
| - Eindringewiderstand | 2 - 5 Kg/mm |
| - Zerbröckelung | 0,1 - 3 Kg |
| - Arbeit geleistet fuer ein Eindringen von 6 mm ins Produkt | 1 - 8,5 Kg x mm. |

## Revendications

1. Procédé de préparation de produits alimentaires lyophilisés prêts à consommer et ayant des formes géométrique prédéterminées, ledit procédé êtant caractérisé en ce qu'il comprend les suivantes phases:
a) mélanger à froid homogénement les ingrédients;
b) homogéneiser et precongeler, à une température de -5 à 2°C les ingrédients and ajouter l'air jusq'à un pourcentage entre 10 et 30% du volume initial des ingrédients;
c)formage des products ainsi obtenus à une forme desirée;
d) surgélation du produit ainsi obtenu à une temperature entre -30°C et -40°C et
e) lyophilisation du produit ainsi obtenu jusqu'a humidité résiduele entre 2 et 6% (comme detérmine par la méthode de Karl Fisher).

2. Procédé selon la revendication 1, caractérisé en ce que aprés la phase e) le produit est glacé en utilisant chocolat ou une autre produit équivalent ou une phase de revêtement est réalisée pour obtenir un revêtement consistant d'un de cellulose ou gomme ou cires ou maltodextrines ou proteins du lait ou sucres.

3. Procédé selon la revendication 1, caractérisé en ce que ladite phase b) est réalisée par brassage continu avec l'air et rafroidissement successif de la mélange.

4. Procédé selon la revendication 3, caractérisé en ce que ladite phase b) est réalisée par piégeage de l'air dans la mélange, rapoidissement est brassag continus, simultanement avec l'operation de piégeage de l'air ou après.

5. Procédé selon les revendications 1 ou 3 ou 4 ou 5, dans lequel ledit piégeage de l'air dans la mélange est réalisé spontanément dans un système ouvert.

6. Procéde selon les revendications 1 ou 4 ou 5, dans lequel ledit piégeage de l'air dans le mélange est rèalise par injection à pression de l'air dans un système fermé.

7. Procédé selon l'une quelconque des revendications 1 à 6, dans lequel ladite phase b) est réalisée à une pression relative équal à ou plus bas de 1 bar.

8. Procédé selon la revendication 3 ou 4, dans lequel ladite phase b) est réalisée par rafroidissement du produit jusqu'à une température entre -5°C e -9°C.

9. Procédé selon l'une quelconque des revendications précédents, caractérisé en ce que dans la phase b) est réalisée la pasteurisation du produit.

10. Procédé selon l'une quelconque des revendications précédentes, dans lequel la phase a) est réalisé en présence des ingrédients liquids et solids par:
a1) brassage des ingrèdients solids
a2) brassage des ingrèdients liquids
a3) brassage des ingrèdients de a1) et a2).

11. Procédé selon l'une quelconque des revendications précédents, dans lequel ladite phase b) est réalisée par réfrigération.

12. Procédé selon l'une quelconque des revendications précédentes, dans lequel ladite phase c) de formage du produit est réalise par coulée dans moule.

13. Procédé selon l'une quelconque des revendications précédentes 3 à 12, dans lequel ladite phase c) de formage est réalisé par extrusion ou par emboutissage.

14. Procédé selon l'une quelconque des revendications précédents, dans lequel ladite phase e) de lyophilisation est réalisé sous pression fortement réduite.

15. Produits alimentaires lyophilisés ayant des formes géométrique prédéterminées, obtenus par le procédé selon l'une quelconque des revendications précédents, lesdits produits étant caractérisés en ce qu'ils son prêts à consommer et comprendent:
| | |
|---|---|
| iògurt frais ou lait frais | 0-100% |
| fruits | 0-100% |
| autres ingrédients liquids ou solids | 0-100% |
| additives | 0-10% |

16. Produit selon la revendication 15, caractérisé en ce qu'il comprend:
| | |
|---|---|
| lait frais | 9-80% |
| fruits | 2-90% |
| autres ingrédients liquids ou solids | 0-70% |
| additives | 0-10% |

17. Produit selon la revendication 15, caractérisé en ce qu'il comprend iògurt entre 10 et 100% et additives entre 0 et 100% et autres ingrédients liquids ou solids entre 0 et 90%.

18. Produit selon la revendication 17, dans lequel iògurt est présent en quantité d'au moins 70%.

19. Produit selon la revendication 15, caractérisé en ce qu'il conprend:
| | |
|---|---|
| iògurt frais | 10-80% |
| fruits | 20-90% |
| autres ingrédients liquids ou solids | 0-70% |
| additives | 0-10% |

20. Produit selon la revendication 19, dans lequel iògurt et fruits sont présents en quantité totale de 70-100%.

21. Produit selon l'une quelconque des revendications précentes, dans lequel lesdits autres ingrédients liquids ou solids consistent de viande, oeufs, végétals, sucres, maltodextrines, sirop de glucose.

22. Produit selon l'une quelconque des revendications précédentes, dans lequel lesdits additives consistent des épaississeurs, émulsionners, colorants, odoriseurs, antioxydants, acidifiants.

23. Produit selon l'une quelconque des revendications précédentes, dans lequel lesdits fruits sont fruits frais ou surgelés ou secs ou pastorisés en forme des petites sphères d'un bouillie à concentration naturele ou supérieure.

24. Produit selon l'une quelconque des revendications précédentes, dont consistance, déterminée par la méthode décrite ou texture, est identifiée par les valeur suivants:
| | |
|---|---|
| - résistance à pénétration | 0.1-10 Kg/mm |
| - friabilité | 0.05-5 Kg |
| - travaille faite pour une pénétration de profondité de 6 mm dans le produit | 0.5-10 Kg x mm |

25. Produit selon l'une quelconque des revendications précédentes, dont consistance, déterminée par la méthode décrite ou texture, est identifiée par les valeur suivants:
| | |
|---|---|
| - résistance à pénétration | 2-5 Kg/mm |
| - friabilité | 0.1-3 Kg |
| - travaille faite pour une pénétration de profondité de 6 mm dans le produit | 1-8.5 Kg x mm |
